# EUROPEAN PATENT SPECIFICATION

(11) **EP 4 277 059 B1**
(45) Date of publication and mention of the grant of the patent: **19.08.2026**
(21) Application number: 22173015.3
(22) Date of filing: 12.05.2022
(51) Int. Cl.: H02B 13/035, H01H 33/666, H01H 33/12, H01H 31/16

(54) **SWITCHGEAR EQUIPMENT FOR ELECTRIC POWER DISTRIBUTION GRIDS**
SCHALTANLAGEN FÜR ELEKTRISCHE STROMVERTEILUNGSNETZE
ÉQUIPEMENT DE COMMUTATION POUR RÉSEAUX DE DISTRIBUTION D'ÉNERGIE ÉLECTRIQUE

(43) Date of publication of application: 15.11.2023
(73) Proprietor: ABB Schweiz AG, 5400 Baden (CH)
(72) Inventor: MORELLI, Emanuele, 24052 Azzano San Paolo (IT); BRUNI, Jacopo, 26900 Lodi (IT); FORLANI, Giorgio, 24058 Romano di Lombardia (IT)
(74) Representative: De Bortoli, Eros

(56) References cited:
- EP-A1- 2 312 603
- EP-A1- 2 645 378
- WO-A1-2014/001029
- WO-A1-90/13932

## Description

The present invention relates to a switchgear equipment for electric power distribution grids, more particularly to a RMU (Ring Main Unit) for medium voltage electric systems. Gas-insulated RMUs are widely used in medium-voltage secondary distribution grids for industrial plants, power generation plants, utilities, building infrastructures, transport infrastructures, and the like. These switchgear systems are generally designed to provide switching functionalities, busbar extension functionalities, cabling functionalities, metering functionalities and other useful functionalities requested for the electric circuits where they are installed.

Normally, a gas-insulated RMU comprises a plurality of switching modules intended to provide switching functionalities. Each switching module typically includes a switching arrangement capable of providing circuit-breaking functionalities (namely breaking and making a current under specified circuit conditions) and circuit-disconnecting functionalities (namely grounding a load-side section of an electric circuit). Additionally, depending on the installation requirements, a RMU may have one or more switching modules, in which the corresponding switching arrangement is electrically connected in series with a fuse assembly including a plurality of fuse devices (one for each electric phase).

Most traditional RMUs of the state of the art have their switching modules filled with sulphur hexafluoride (SF₆). In this case, since the above-mentioned insulating gas ensures excellent dielectric insulation performances and arc-quenching capabilities, each switching module is generally equipped with a single switching device designed to provide the required circuit-breaking and circuit-disconnecting functionalities. Additionally, possible fuse devices can be easily accommodated together with the above-mentioned switching device in the internal volume of the corresponding switching module as dielectric insulation between the internal live parts can be easily ensured.

As is known, however, SF₆ is a powerful greenhouse gas with a very high GWP (Global Warming Potential) and its usage is subject to severe restrictions for environmental preservation purposes. For this reason, over the years, there has been made a considerable effort to develop and design switchgear systems not employing SF₆ as an insulating gas.

Recently, some RMUs have been developed, in which the switching modules are filled with pressurized dry air or an environment-friendly insulation gas, such as a mixture of oxygen, nitrogen, carbon dioxide and/or a fluorinated gas.

These RMUs have proven to ensure a relatively low environmental impact. However, they still offer poor performances in terms of structural compactness and reliability in operation.

Since the used environment-friendly insulation gases are less performant than SF₆ in terms of dielectric insulation and arc-quenching capabilities, the switching modules must be equipped with relatively complicated switching arrangements (normally including a plurality of cooperating switching devices) in order to ensure the required circuit-breaking and circuit-disconnecting functionalities. Additionally, the switching modules accommodating fuse devices must be necessarily designed with a relatively large size in order to ensure a safe dielectric insulation between the internal live parts.

Obviously, the above-mentioned drawbacks may entail relevant problems for the industrial production and installation on the field of the switchgear equipment.

Document WO 90/13932 A1 discloses a switchgear equipment including a plurality of switching modules, each for three electric phases to be switched by rotatable movable contacts, and including a fuse assembly.

Document WO 2014/001029 A1 discloses a switching module for three electric phases to be switched by rotatable movable contacts and vacuum interrupters actuated by a cam plate that rotates on the same rotary support as the movable contact rotates on.

The main aim of the present invention is to provide a switchgear equipment for MV electric power distribution grids that allows solving or mitigating the above-mentioned technical problems.

More particularly, it is an object of the present invention to provide a switchgear equipment having switching modules with a remarkable structural compactness, even when they accommodate fuse devices.

Another object of the present invention is to provide a switchgear equipment having switching modules, in which high levels of dielectric insulation between the internal live parts are ensured. Another object of the present invention is to provide a switchgear equipment that can be easily manufactured at industrial level, at competitive costs compared to the solutions of the state of the art.

In order to fulfill these aim and objects, the present invention provides a switchgear equipment, according to the following claim 1 and the related dependent claims.

The present invention relates to a switchgear equipment for electric power distribution grids. The switching equipment includes a plurality of switching modules.

Each switching module comprises an outer casing defining an internal volume filled with an insulating gas, first module terminals electrically couplable with corresponding first conductors of an electric line and second module terminals electrically couplable with corresponding second conductors of an electric line.

Each switching module comprises a switching device, which includes, for each electric pole:
- a first pole terminal, a second pole terminal and a ground terminal;
- a plurality of fixed contacts spaced apart one from another, wherein said fixed contacts include a first fixed contact electrically connected to said first pole terminal, a second fixed contact electrically connected to said second pole terminal, a third fixed contact electrically connected to said ground pole terminal and fourth fixed contact;
- a movable contact reversibly movable about a rotation axis according to opposite first and second rotation directions, so that said movable contact can be coupled to or uncoupled from said fixed contacts. Said movable contact is coupled to a first fixed contact region of said first fixed contact and to a second fixed contact region of said second fixed contact, thereby electrically connecting said first and second fixed contacts, when said switching device is in a closed state. Said movable contact is coupled to no fixed contacts, when said switching device is in an open state. Said movable contact is coupled to a third fixed contact region of said second fixed contact and to a fourth fixed contact region of said third fixed contact, thereby electrically connecting said second and third fixed contacts, when said switching device is in a grounded state;
- a vacuum interrupter comprising a fixed arc contact electrically connected to said first pole terminal and a movable arc contact electrically connected to said fourth fixed contact. The movable arc contact is reversibly movable along a corresponding translation axis between a coupled position with said fixed arc contact and an uncoupled position from said fixed arc contact. The vacuum interrupter further includes a vacuum chamber, in which said fixed arc contact and said movable arc contact are enclosed and are coupled or decoupled;
- a motion transmission mechanism operatively coupled to said movable arc contact and actuatable by said movable contact to cause a movement of said movable arc contact along said translation axis, when said movable contact moves about said rotation axis.

According to the invention, the switchgear equipment comprises one or more first switching modules and one or more second switching modules. Each first switching module comprises a switching device as defined above and a fuse assembly electrically connected in series between the first and second module terminals of said first switching module. The switching device and the fuse assembly are fully accommodated in the internal volume of the corresponding first switching module. Each second switching module comprises a switching device as defined above electrically connected in series between the first and second module terminals of said second switching module. The switching device is fully accommodated in the internal volume of said second switching module.

Preferably, the switching device of each first switching module has, for each electric pole, the first pole terminal electrically connected to a corresponding first module terminal of said first switching module, the second pole terminal electrically connected to a corresponding fuse device of said fuse assembly, and the ground terminal electrically connected to a corresponding ground conductor of said first switching module.

Preferably, the switching device of each second switching module has, for each electric pole, the first pole terminal electrically connected to a corresponding first module terminal of said second switching module, the second pole terminal electrically connected to a corresponding second module terminal of said second switching module, and the ground terminal electrically connected to a corresponding ground conductor of said second switching module.

Preferably, the switching device of each first switching module is accommodated in a first portion of internal volume, which is proximal to the top wall of the outer casing of said first switching module, and in that the fuse assembly of each first switching module is accommodated in a second portion of internal volume, which is proximal to an opposite base wall of the outer casing of said first switching module.

Preferably, the switching device and the fuse devices of each first switching module extend along parallel longitudinal axes perpendicular to the front and rear walls of the outer casing of said first switching module.

Preferably, the fuse assembly of each first switching module comprises a pair of fuse devices arranged in proximity of a lateral wall of the outer casing of said first switching module.

Preferably, the switching device of each switching module has, for each electric pole, the first and second fixed contact regions of said first and second fixed contacts arranged at opposite sides of said switching device relative to the rotation axis of said movable contact, said first and second contact regions being displaced relative to a first alignment direction of said first and second pole terminals, so that said first and second contact regions are aligned along a second alignment direction angularly spaced from said first alignment direction.

Preferably, the switching device of each switching module has, for each electric pole, said vacuum interrupter arranged in proximity of said first pole terminal and oriented so that the translation axis of said movable arc contact is parallel to or coinciding with the first alignment direction of said first and second pole terminals.

Preferably, the switching device of each switching module is a load-break switch for medium voltage electric systems.

Preferably, the switchgear equipment is a Ring Main Unit for medium voltage electric systems. Further characteristics and advantages of the invention will emerge from the description of preferred, but not exclusive embodiments of the switching device, according to the invention, non-limiting examples of which are provided in the attached drawings, wherein:
- Figure 1-2 are schematic views of the switchgear equipment, according to the invention;
- Figure 3 is an outer view of a generic switching module of the switchgear equipment, according to the invention;
- Figures 4-10 are schematic views partially showing the operation of the switching device included in a generic switching module of the switchgear equipment, according to the invention.

With reference to the figures, the present invention relates to a switchgear equipment 100 for electric power distribution grids operating at medium voltage levels, i.e. at operating voltages higher than 1 kV AC and 1.5 kV DC up to some tens of kV, e.g. up to 72 kV AC and 100 kV DC.

For the purposes of the present invention, the terms "terminal" and "contact" should be hereinafter intended, unless otherwise specified, as "electric terminal" and "electric contact", respectively, thereby referring to electrical components suitably arranged to be electrically connected or coupled to other electrical conductors.

The switchgear equipment 100 is advantageously of the multi-phase (e.g. three-phase) type and, in operation, it is electrically connected to electric circuits having multiple (e.g. three) electric phases.

The switchgear equipment 100 comprises a plurality of switching modules 101A, 101B in which components designed to provide switching functionalities are installed.

The switchgear equipment 100 may generally include additional modules, in which components designed to provide other functionalities (e.g. busbar extension functionalities, cabling functionalities, metering functionalities and the like) are accommodated. In principle, these additional modules may be realized according to solutions of known type and, hereinafter, they will not be described in further details for the sake of brevity.

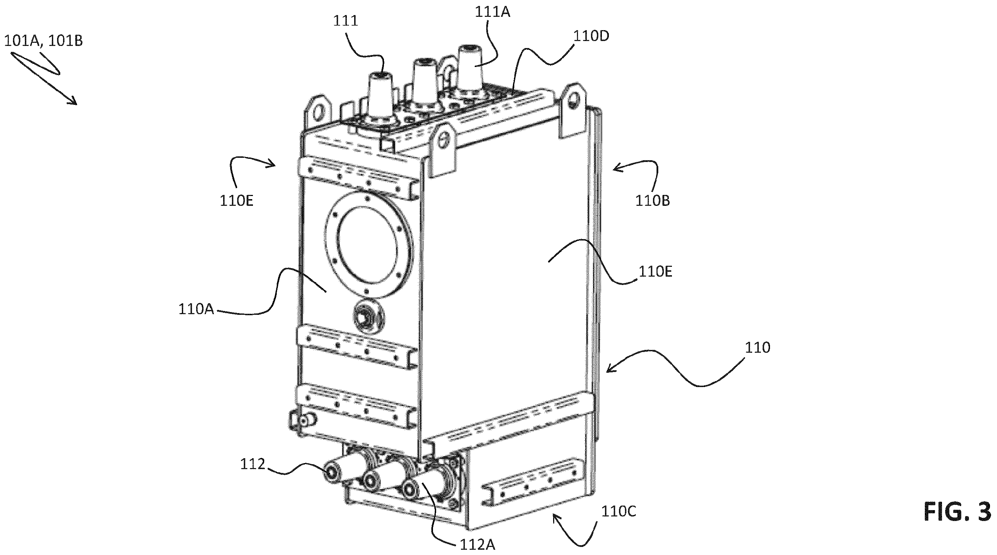

A schematic view of a generic switching module 101A, 101B of the switchgear equipment is shown in figure 3.

The switching module 101A, 101B comprises an outer casing 110, which can be made of a conductive material or an electrically insulating material. The outer casing 110 defines an internal volume, which is filled with a pressurized insulating gas, preferably pressurized dry air or another insulating gas having a low environmental impact, such a mixture of oxygen, nitrogen, carbon dioxide and/or fluorinated gas.

The outer casing 110 has preferably a cuboid shape with mutually perpendicular walls. Referring to a normal installation position of the switchgear equipment (as shown in the cited figures), the outer casing 110 preferably includes opposite front and rear walls 110A, 110B, opposite base and top walls 110C, 110D and opposite lateral walls 110E. Preferably, in operation, internal volume defined by the outer casing 110 can be accessed from the front wall 110A.

When the switching modules 101A, 101B of the switchgear equipment are arranged adjacent one to another, the outer casing of a given switching module may have one or more walls in common with the outer casing of other switching modules. Preferably, as shown in the cited figures, the outer casings of the switching modules may be integrated to form a single casing structure provided with multiple cells corresponding to the switching modules 101A, 101B.

Each switching module 101A, 101B comprises first module terminals 111 (one for each electric phase), which in operation are electrically coupled with corresponding first conductors of an electric line, and second module terminals 112 (one for each electric phase), which in operation are electrically coupled with corresponding second conductors of an electric line.

Preferably, each switching module 101A, 101B comprises first and second bushings 111A, 112A accommodating the first and second module terminals, respectively.

Preferably, the first and second bushings 111A, 112A protrude from the top and front walls 110D, 110A of the outer casing 110 of each switchgear module, respectively.

Each switching module 101A, 101B comprises a switching device 1 comprising a plurality of electric poles (one for each electric phase).

The switching device 1 is configured to provide circuit-breaking functionalities under specified circuit conditions (nominal or overload conditions) as well as circuit-disconnecting functionalities, in particular grounding a load-side section of an electric circuit.

For each electric pole, the switching device 1 comprises a main switch arrangement 5, 6, 7, 8, 10 configured to allow or prevent the flow of an electric current through said electric pole or put a load-side terminal 12 of the switching device at a ground voltage.

The switching device 1 further comprises a shunt vacuum interrupter 20 configured to break an electric current flowing through said electric pole.

As it will better emerge from the following, the main switch arrangement 5, 6, 7, 8, 10 and the vacuum interrupter 20 are arranged so that the switching device 1 has a smaller width and height in comparison to corresponding switching devices of the state of the art. This advantageous feature allows realizing switching modules with a size comparable to or smaller than the switching modules of corresponding traditional SF₆-insulated switchgear systems, even if an environment-friendly insulating gas is used to provide a dielectric insulation between the live parts.

According to the invention, the switchgear equipment 100 comprises one or more first switching modules 101A and one or more second switching modules 101B.

According to the invention, each first switching module 101A comprises the switching device 1 and a fuse assembly 150 including a plurality of fuse devices 151 (one for each electric phase).

The switching device 1 and the fuse assembly 150 are electrically connected in series between the first and second module terminals 111, 112 of each first switching module 101A. In practice, in each first switching module 101A, the switching device 1 has each electric pole electrically connected between a corresponding first module terminal 111 and a corresponding fuse device 151 of the fuse assembly while the fuse assembly 150 has each fuse device 151 of electrically connected between a corresponding electric pole of the switching device and a corresponding second module terminal 112.

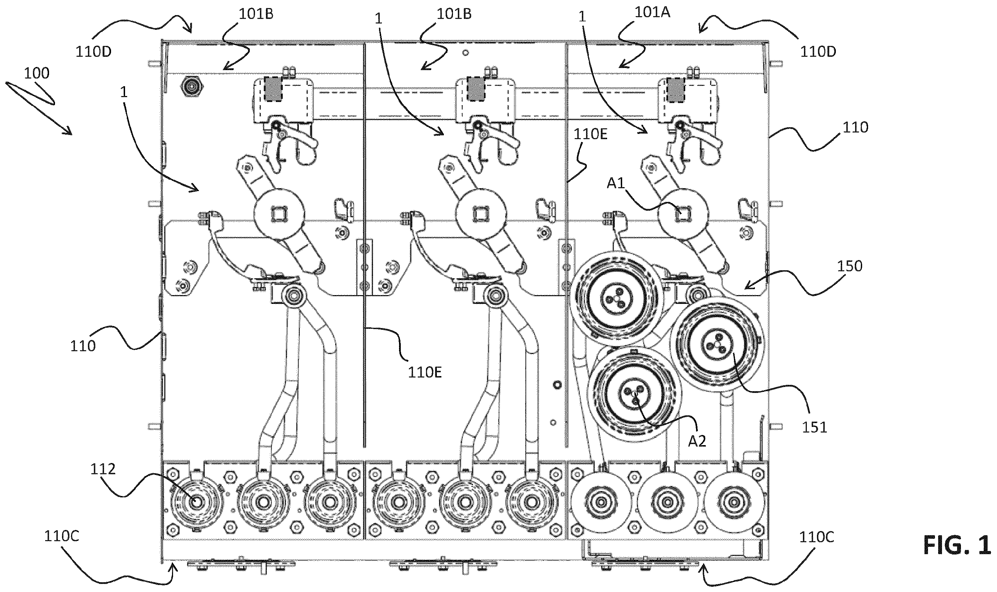

Advantageously, suitable electrical connections (partially shown in figures 1-2), are arranged to connect electrically the switching device 1, the fuse assembly 150 and the module terminals 111, 112.

The switching device 1 and the fuse assembly 150 are fully accommodated in the internal volume of each first switching module 101A.

Preferably, as shown in figures 1-3, in each first switching module 101A, the switching device 1 and the fuse assembly 150 are accommodated in different portions of internal volume. In particular, the switching device 1 is accommodated in a first portion of internal volume, which is proximal to a top wall 110D of the outer casing 110, while the fuse assembly 150 of each first switching module is accommodated in a second portion of internal volume, which is proximal to the wall 110C of the outer casing 110 (figure 1).

Preferably, as shown in figures 1-2, in each first switching module 101A, the switching device 1 and the fuse devices 150 extend along parallel longitudinal axes A1, A2 perpendicular to the front and rear walls 110A, 110B of the outer casing 110.

Preferably, as shown in figures 1 and 3, in each first switching module 101A, the fuse assembly 150 has a pair of fuse devices 151 arranged in proximity of a same lateral wall 110E of the outer casing 110. The fuse devices 151 can thus be arranged according to a triangular configuration (reference is made to the observation plane of figure 1), which allows saving space, thereby ensuring a safe dielectric insulation even if each switching module 101A has a relatively small internal volume for accommodating the switching device 1 and the fuse assembly 150.

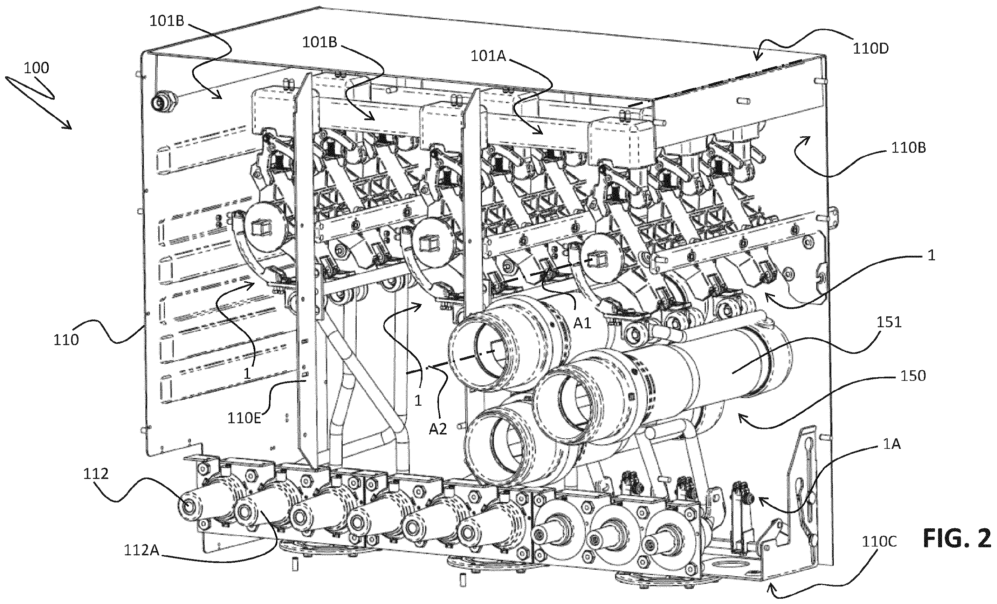

Preferably, each first switching module 101A comprises a disconnecting device 1A in addition to the switching device 1 (figure 2). The additional disconnecting device 1A is configured to electrically connect each second module terminal 112 to a ground conductor, when the switching device 1 is in a grounded state.

Preferably, the disconnecting device 1A comprises a pair of blades for each second module terminal 112 of the first switching module 101A. Each pair of blades is electrically connected to a ground conductor and it is reversibly movable between a coupled position to and uncoupled position from a corresponding second module terminal 112. A suitable mechanism (not shown) is conveniently arranged to actuate the blades of the disconnecting device 1A in coordination with the operation of the switching device 1.

According to the invention, each second switching module 101B comprises the switching device 1 only, without a fuse assembly and a disconnecting device operatively coupled thereto. The switching device 1 is electrically connected in series between the first and second module terminals 111, 112 of the corresponding switching module 101A. In practice, in each second switching module 101B, the switching device 1 has each electric pole electrically connected between corresponding first and second module terminals 111, 112.

Advantageously, suitable electrical connections (partially shown in figures 1-2), are arranged to connect electrically the switching device 1 and the module terminals 111, 112.

The switching device 1 is fully accommodated in the internal volume of each second switching module 101B.

Preferably, as shown in figures 1-3, in each second switching module 101B, the switching device 1 is accommodated in a portion of internal volume, which is proximal to a top wall 110D of the outer casing 110.

Preferably, as shown in figures 1-2, in each second switching module 101B, the switching device 1 extends along a longitudinal axis A1 perpendicular to the front and rear walls 110A, 110B of the outer casing 110.

In the embodiments shown in the cited figures, the switchgear equipment 100 includes a single first switching module 101A and a pair of second switching modules 101B.

According to other embodiments of the invention (not shown), however, the switchgear equipment 100 may be configured differently, according to the needs. As an example, it may include multiple first switching modules 101A and multiple second switching modules 101B. As a further example, it may include a single first switching module 101A and a single second switching module 101B.

In the embodiments shown in the cited figures, the switchgear equipment 100 has the first and second switching modules 101A, 101B arranged adjacent one to another. According to other embodiments of the invention (not shown), however, the first and second switching modules 101A, 101B may have a different layout, according to the needs.

As illustrated above, according to the invention, each switching module 101A, 101B comprises a switching device 1. Preferably, such a switching device is particularly adapted to operate as a load-break switch for providing the above-mentioned circuit-breaking functionalities and circuit-disconnecting functionalities.

For each electric pole, the switching device 1 comprises a first pole terminal 11, a second pole terminal 12 and a ground terminal 13.

When it is accommodated in a first switching module 101A, the switching device 1 has, for each electric pole, the first pole terminal 11 electrically connected to a corresponding first module terminal 111, the second pole terminal 12 electrically connected to a corresponding fuse device 151 of the fuse assembly 150 and the ground terminal 13 electrically connected to a corresponding ground conductor of said first switching module.

When it is accommodated in a second switching module 101B, the switching device 1 has, for each electric pole, the first pole terminal 11 electrically connected to a corresponding first module terminal 111, the second pole terminal 12 electrically connected to a corresponding second module terminal 112 and the ground terminal 13 electrically connected to a corresponding ground conductor of said first switching module.

As mentioned above, for each electric pole, the switching device 1 comprises a main switch arrangement 5, 6, 7, 8, 10 configured to allow or prevent the flow of an electric current through said electric pole or put a load-side terminal 12 of the switching device at a ground voltage.

For each electric pole, the main switch arrangement of the switching device 1 comprises a first fixed contact 5, a second fixed contact 6, a third fixed contact 7 and a fourth fixed contact 8.

The first fixed contact 5 is electrically connected to the first pole terminal 11, the second fixed contact 6 is electrically connected to the second pole terminal 12, the third fixed contact 7 is electrically connected to the ground pole terminal 13 while the fourth fixed contact 8 is electrically connected to the vacuum interrupter 20 of the switching device as better explained in the following. In some operating conditions of the switching device, the fourth fixed contact 8 can be electrically connected with the second fixed contact 6.

For each electric pole, the main switch arrangement of the switching device 1 further comprises a movable contact 10 reversibly movable (along a given plane of rotation) about a corresponding rotation axis A1, which is preferably perpendicular to the front and rear walls 110A, 110B of the outer casing 110 of the corresponding switching module.

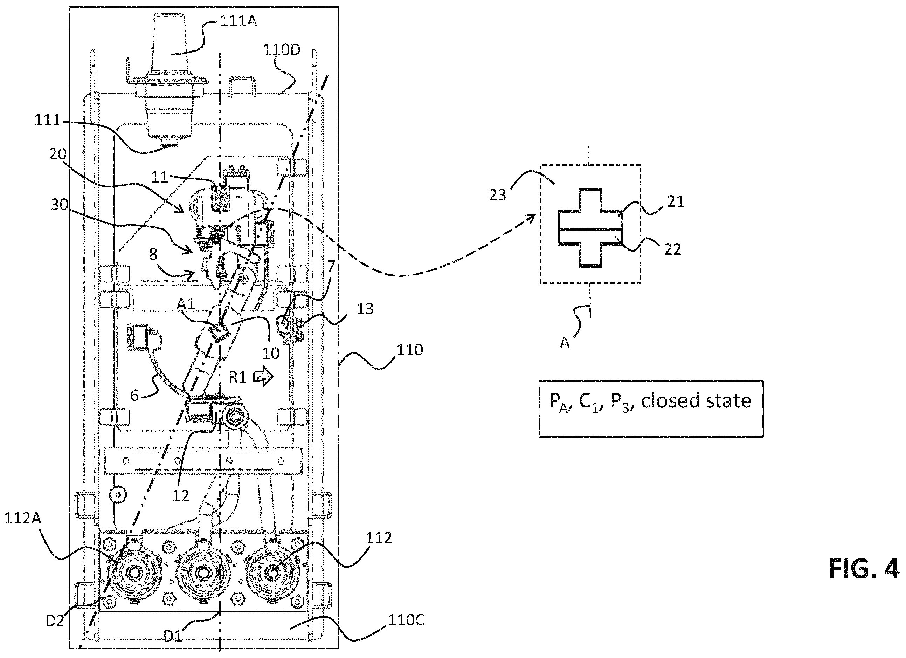

The movable contact 10 can rotate according to a first rotation direction R1, which is conveniently oriented away from the first fixed contact 5, or according to a second rotation direction R2, which is opposite to the first rotation direction R1 and is oriented towards the first fixed contact 5. With reference to the observation plane of figures 4-10, the above-mentioned first rotation direction R1 is oriented counter-clockwise while the above-mentioned second rotation direction R2 is oriented clockwise.

In operation, the switching device 1 is capable of switching in three different operating states, namely:
- a closed state, in which each electric pole has the first and second pole terminals 11, 12 electrically connected one to another and both electrically disconnected from the ground terminal 13. When the switching device is in a closed state, a current can flow along each electric pole between the corresponding first and second pole terminals 11, 12;
- an open state, in which each electric pole has the first and second pole terminals 11, 12 and the ground terminal 13 electrically disconnected one from another. When the switching device is in an open state, no currents can flow along the electric poles;
- a grounded state, in which each electric pole has the first and second pole terminals 11, 12 electrically disconnected one from another and the second pole terminal 12 and the ground terminal 13 electrically connected one to another. When the switching device is in a grounded state, no currents can flow along the electric poles. However, the second pole terminal 12 of each electric pole (and therefore the second line conductor connected thereto) is put at a ground voltage.

In operation, the switching device 1 is capable of carrying out different type of manoeuvres, each corresponding to a transition among the above-mentioned operating states. In particular, the switching device is capable of carrying out:
- an opening manoeuvre when it switches from a closed state to an open state;
- a closing manoeuvre when it switches from an open state to a closed state;
- a disconnecting manoeuvre when it switches from an open state to a grounded state;
- a reconnecting manoeuvre when it switches from a grounded state to an open state.

The switching device can switch from a closed state to a grounded state by carrying out an opening manoeuvre and subsequently a disconnecting manoeuvre while the switching device can switch from a grounded state to a closed state by carrying out a reconnecting manoeuvre and subsequently a closing opening manoeuvre.

In order to carry out the above-mentioned manoeuvres, the movable contact 10 of each electric pole is suitably driven according to the above-mentioned first rotation direction R1 or second rotation direction R2.

In particular, the movable contact 10 moves according to the first rotation direction R1 during an opening manoeuvre or a disconnecting manoeuvre of the switching device and it moves according to the second rotation direction R2 during a closing manoeuvre or a reconnecting manoeuvre of the switching device.

In general, the movable contact 10 of each electric pole is reversibly movable between a first end-of-run position P_{A}, which corresponds to a closed state of the switching device, and a second end-of-run position P_{C}, which corresponds to a grounded state of the switching device. Conveniently, the movable contact 10 passes through an intermediate position P_{B}, which corresponds to an open state of the switching device, when it moves between the first and second end-of-run positions P_{A}, P_{C}.

As the movable contact 10 is reversibly movable about the rotation axis A1, the movable contact 10 can be coupled to or uncoupled from one or more of the fixed contacts 5, 6, 7, 8 thereby being electrically connecting or electrically disconnecting these fixed contacts depending on the on-going manoeuvre.

Conveniently, the movable contact 10 follows an arc-shaped trajectory when it moves between the first and second end-of-run positions P_{A}, P_{C}.

In the switching device 1, for each electric pole, the first fixed contact 5 and the second fixed contact 6 have, respectively, a first contact region and a second contact region that are adapted to be coupled to the movable contact 10, when the movable contact 10 is in the first end-of-run position P_{A} (i.e. the switching device is in a closed state).

Therefore, when it is in the first end-of-run position P_{A}, the movable contact 10 electrically connects the first and second fixed contacts 5, 6 and, consequently, the first and second pole terminals 11, 12.

In the switching device of the invention, for each electric pole, the second fixed contact 6 and the third fixed contact 7 have, respectively, a third contact region and a fourth contact region that are adapted to be coupled to the movable contact 10, when the movable contact 10 is in the second end-of-run position P_{C} (i.e. the switching device is in a grounded state).

Therefore, when it is in the second end-of-run position P_{C}, the movable contact 10 electrically connects the second and third fixed contacts 6, 7 and, consequently, the second and third pole terminals 12, 13.

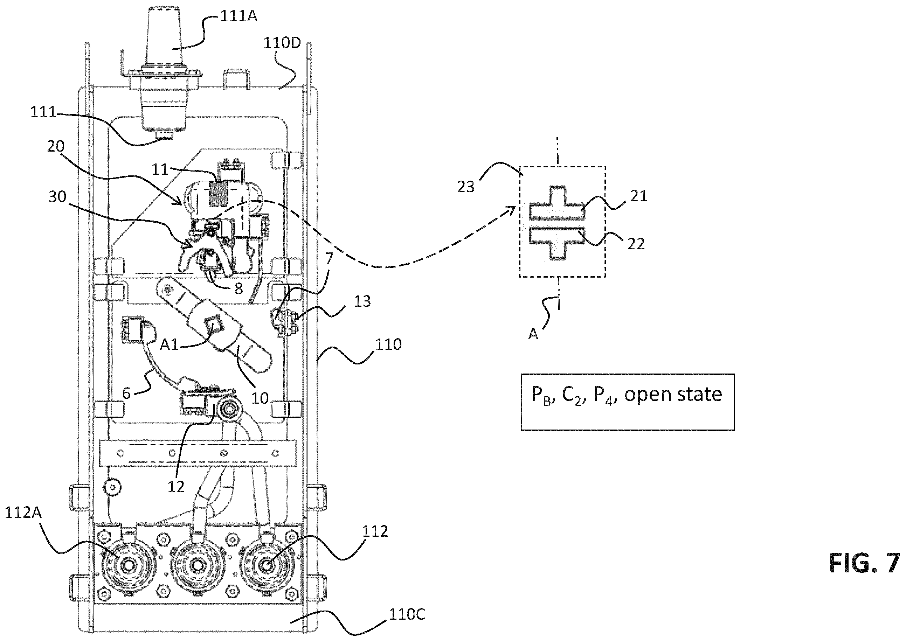

When it is in the intermediate position P_{B} (open state of the switching device - figure 7), the movable contact 10 is coupled to no fixed contacts and it is electrically disconnected from said fixed contacts and, consequently, the first, second and third pole terminals 11, 12, 13 are electrically disconnected one from another.

In the switching device 1, for each electric pole, the fourth fixed contact 8 is arranged in an intermediate position between the first fixed contact region of the first fixed contact 5 and the third fixed contact region of the second fixed contact 6 while the third fixed contact 7 is arranged in an intermediate position between the first fixed contact region of the first fixed contact and the second fixed contact region of the second fixed contact 6.

Advantageously, the fixed contacts 5, 6, 7, 8 are formed by corresponding pieces of conductive material, which are suitably shapes according to the needs.

Preferably, the first fixed contact 5 is formed by a reversed-L shaped conductive body having a shorter leg with a first contoured end coupled to the first pole terminal 11 and a longer leg with a second blade-shaped free end forming the above-mentioned first fixed contact region.

Preferably, the second fixed contact 6 is formed by an arc-shaped conductive body extending partially around the rotation axis A1 of the movable contact 10 and having a first contoured end coupled to the second pole terminal 12, a second blade-shaped free end forming the above-mentioned third fixed contact region and an intermediate blade-shaped protrusion forming the above-mentioned second contact region. In operation, also the first contoured end of the fixed contact 6 is couplable with the movable contact 10.

Preferably, the third fixed contact 7 is formed by a blade-shaped conductive body having a contoured end coupled to the third pole terminal 13 and a blade-shaped free end forming the above-mentioned fourth fixed contact region.

Preferably, the fourth contact 8 is formed by a shaped conductive body having a leg coupled to the vacuum interrupter 20 of the switching device and a contoured head slidingly couplable with the movable contact 10.

The movable contact 10 has a first movable contact region and a second movable contact region arranged at opposite positions relative to the rotation axis A1.

Preferably, in operation, the first movable contact region of the movable contact 10 can be coupled to or uncoupled from the first contact 5 (at the first fixed contact region thereof), the fourth fixed contact 8 and the second fixed contact 6 (at the third contact region thereof), when the movable contact 10 moves between the first and second end-of-run positions P_{A}, P_{C}.

Preferably, in operation, the second contact region of the movable contact 10 can be coupled to or uncoupled from the second fixed contact 6 (at the second contact region and the first contoured end thereof) and the third fixed contact 7 (at the fourth contact region thereof), when the movable contact 10 moves between the first and second end-of-run positions P_{A}, P_{C}.

Preferably, the first and second movable contact regions of the movable contact 10 are aligned one to another along a same direction.

Advantageously, the movable contact 10 is formed by a shaped piece of conductive material.

Preferably, the movable contact 10 is formed by an elongated conductive body centred on the rotation axis A1 and having a first contoured end forming the above-mentioned first movable contact region and a second contoured end (opposite to said first end) forming the above-mentioned second movable contact region.

Preferably, the first and second contoured ends of the movable contact 10 have a single-blade shape or a double-blade shape.

Conveniently, the switching device 1 comprises an actuation assembly (not shown) providing suitable actuation forces to actuate the movable contacts 10 of the electric poles.

Preferably, such an actuation assembly comprises a motion transmission shaft made of electrically insulating material, which can rotate about the rotation axis A1 and it is coupled to the movable contacts 10 of the electric poles to provide rotational mechanical forces to actuate the movable contacts 10 during the manoeuvres of the switching device.

The above-mentioned actuation assembly preferably comprises an actuator coupled to the transmission shaft through a suitable kinematic chain. The actuator may be, for example, a mechanical actuator, an electric motor or an electromagnetic actuator.

In general, the actuation assembly of the switching device 1 may be realized according to solutions of known type. Therefore, in the following, it will be described only in relation to the aspects of interest of the invention, for the sake of brevity.

As mentioned above, for each electric pole, the switching device 1 further comprises a shunt vacuum interrupter 20 configured to break an electric current flowing through said electric pole. The vacuum interrupter 20 comprises a fixed arc contact 21 electrically connected to the first pole terminal 11, preferably in parallel to the first fixed contact 5.

Preferably, the fixed arc contact 21 is formed by an elongated piece of conductive material having one end coupled to the first pole terminal 11 and an opposite free end intended to be coupled to or decoupled from another arc contact.

The vacuum interrupter 20 comprises a movable arc contact 22 reversibly movable along a corresponding translation axis A, which is preferably parallel or coincident with a main longitudinal axis of the vacuum interrupter.

As it is reversibly movable about the translation axis A, the movable arc contact 22 can be coupled to or uncoupled from the fixed arc contact 21, thereby being electrically connected to or electrically disconnected from this latter.

The movable arc contact 22 is electrically connected to the fourth fixed contact 8, preferably through a conductor (e.g. a flexible conductor) or other equivalent connection means.

Conveniently, the movable arc contact 22 is solidly coupled to a contact shaft (not shown), which is adapted to transmit motion to the movable arc contact 22 and which is preferably made, at least partially, of an electrically insulating material. Such a contact shaft is conveniently aligned with the movable arc contact 22 along the translation axis A.

According to possible variants of the invention (not shown), such a contact shaft is coupled to a compression spring coaxially arranged to exert a constant compression force directed to press the movable arc contact 22 towards the fixed arc contact 21, thereby opposing to any movement of the movable arc contact 22 away from the fixed arc contact 21.

Preferably, the movable arc contact 22 is formed by an elongated piece of conductive material having one end coupled to the above-mentioned contact shaft and an opposite free end intended to couple to or decouple from the fixed contact 21.

The vacuum interrupter 20 comprises a vacuum chamber 23, in which a vacuum atmosphere is present. Conveniently, the fixed arc contact 21 and the movable arc contact 22 are enclosed in the vacuum chamber 23 and they are mutually coupled or decoupled inside said vacuum chamber, therefore being permanently immersed in a vacuum atmosphere.

For each electric pole, the switching device 1 comprises a motion transmission mechanism 30 operatively coupled to the movable arc contact 22 (preferably through the above-mentioned contact shaft) and actuatable by the movable contact 10 to cause a movement of the movable arc contact 22, when such a movable contact moves about its rotation axis A1.

Preferably, the motion transmission mechanism 30 is configured to take alternatively a first configuration C1, which corresponds to a closed condition of the vacuum interrupter 20, with the movable arc contact 22 is in a coupled position P3 with the fixed arc contact 21, and a second configuration C2, which corresponds to an open condition of the vacuum interrupter 20, with the movable arc contact 22 is in an uncoupled position P4 from the fixed arc contact 21.

Preferably, the motion transmission mechanism 30 is configured to maintain stably the first configuration C1 or the second configuration C2, if it is not actuated by the movable contact 10, and it is configured to switch its configuration, upon an actuation by the movable contact 10. Any transition of configuration of the motion transmission mechanism 30 causes a corresponding movement of the movable arc contact 22 and a consequent change of condition of the vacuum interrupter 20.

Preferably, the motion transmission mechanism 30 is configured to switch from the first configuration C1 to the second configuration C2 upon an actuation by the movable contact 10, while this latter is moving according to the first rotation direction R1 and it electrically connects the fourth fixed contact 8 to the second fixed contact 6. The transition of the motion transmission mechanism 30 from the first configuration C1 to the second configuration C2 causes a corresponding movement of the movable arc contact 22 from the coupled position P3 to the uncoupled position P4.

Preferably, the motion transmission mechanism 30 is configured to switch from the second configuration C2 to the first configuration C1 upon an actuation by the movable contact 10, while this latter is moving according to the second rotation direction R2 and it electrically connects the first fixed contact 5 to the second fixed contact 6. The transition of the motion transmission mechanism 30 from the second configuration C2 to the first configuration C1 causes a corresponding movement of the movable arc contact 22 from the uncoupled position P4 to the coupled position P3.

Preferably, the motion transmission mechanism 30 comprises a pair of lever elements of electrically insulating material, which suitably interact so that the motion transmission mechanism 30 operates according to the bistable behaviour described above as this solution simplifies the synchronization between the movements of the movable arc contact 22 and the movable contact 10, during an opening or closing manoeuvre of the switching device.

In principle, however, the motion transmission mechanism 30 may be realized according to other solutions (even of known type), which are here not described in details for the sake of brevity.

Preferably, for each electric pole, the switching device 1 comprises the first and second pole terminals 11, 12 arranged at opposite sides (relative to the rotation axis A1 of the movable contact 10) and aligned one to another along a first alignment direction D1, which conveniently crosses the rotation axis A1 of the movable contact 10.

As shown in the cited figures, the first alignment direction D1 is preferably perpendicular to the base and top walls 110C, 110D of the outer casing of the switching module 101A, 101B where the switching device 1 is accommodated.

Preferably, for each electric pole, the switching device 1 has the first and second fixed contacts 5, 6 with the above-mentioned first and second fixed contact regions arranged at opposite sides (relative to the rotation axis A1 of the movable contact 10) and angularly displaced relative to the first alignment direction D1 of the first and second pole terminals 11, 12. In practice, the first and second fixed contact regions of the first and second fixed contacts 5, 6 are misaligned with respect to the first and second pole terminals 11, 12.

In other words, the first and second fixed contact regions of the first and second fixed contacts 5, 6 are aligned one to another along a second alignment direction D2 (conveniently crossing the rotation axis A1 of the movable contact 10) that is angularly spaced from the first alignment direction D1 of the first and second pole terminals 11, 12.

For the sake of clarity, it is specified that the term "angularly spaced" referred to the first and second alignment directions D1, D2 means that these alignment directions are not parallel or coincident. In practice, they intersect one to another at the rotation axis A1 of the movable contact 10.

The above-illustrated solution allows improving the structural compactness of the electric poles of the switching device 1 while ensuring that safe dielectric distances between the live internal components are maintained.

The special arrangement of the first and second fixed contact regions of the fixed contacts 5, 6 relative to the first and second pole terminals 11, 12 allows obtaining a free space in proximity of the first pole terminal 11, which can be conveniently exploited for accommodating other components of the electric pole in a portion of internal volume substantially coaxial with the alignment direction D1 of the pole terminals 11, 12. This allows reducing the overall width of the switching device (compared to traditional solutions of the state of the art) at the same time ensuring safe dielectric distances between the internal live components.

According to preferred embodiments of the invention, the vacuum interrupter 20 is arranged in proximity of the first pole terminal 11 and is oriented so that the translation axis A of the movable arc contact 22 is parallel to or coinciding with the first alignment direction D1 of the first and second pole terminals 11, 12. As shown in the cited figures, the translation axis A is perpendicular to the base and top walls 110C, 110D of the outer casing of the switching module 101A, 101B where the switching device 1 is accommodated.

In practice, the vacuum interrupter 20 is oriented vertically (reference is made to a normal operating position of the switching device as shown in the cited figures) and is arranged in proximity of the first pole terminal 11. This allows displacing the whole assembly formed by the vacuum interrupter 20, the fourth fixed contact 8 and the motion transmission mechanism 20 towards the first pole terminal 11, coaxially with the alignment direction D1 of the pole terminals 11, 12.

The overall height of the switching device can thus be reduced (compared to traditional solutions of the state of the art) at the same time ensuring safe dielectric distances between the live internal components.

It is evident how the above-described special arrangements of the switching device 1 allows reducing the overall size of the switching modules of the switchgear equipment, even if an environment-friendly insulating gas is used to provide a dielectric insulation between the live parts.

For a generic switching module 101A, 101B of the switchgear equipment 100, the operation of the switching device 1 is now described in more details.

### Closed state of the switching device

When it is in a closed state (figure 4), the switching device 1 has, for each electric pole:
- the movable contact 10 in the first end-of-run position P_{A};
- the movable contact 10 with the first movable contact region coupled to the first fixed contact region of the first fixed contact 5 and the second movable contact region coupled to the second fixed contact region of the second fixed contact 6;
- the movable arc contact 22 in a coupled position P3 with the fixed arc contact 21;
- the first and second fixed contacts 5, 6 electrically connected one to another and electrically disconnected from the third fixed contact 7;
- the fourth fixed contact 8 electrically disconnected from the second fixed contact 6;
- the motion transmission mechanism 30 in the first configuration C1.

A current can flow through each electric pole between the first and second pole terminals 11, 12 passing through the first fixed contact 5, the movable contact 10 and the second fixed contact 6. No currents can flow through the vacuum interrupter 20 as the fourth fixed contact 8 is electrically disconnected from the second fixed contact 6.

### Open state of the switching device

When it is in an open state (figure 7), the switching device 1 has, for each electric pole:
- the movable contact 10 in the intermediate position P_{B} and decoupled from any fixed contact;
- the movable arc contact 22 in an uncoupled position P4 from the fixed arc contact 21;
- the first, second and third fixed contacts 5, 6, 7 electrically disconnected one from another;
- the fourth fixed contact 8 electrically disconnected from the second fixed contact 6;
- the motion transmission mechanism 30 in the second configuration C2.

Any current path between the first and second pole terminals 11, 12 is interrupted at level of the movable contact regions of the movable contact 10 ("double-disconnection"). No currents can flow between the first and second pole terminals 11, 12.

### Grounded state of the switching device

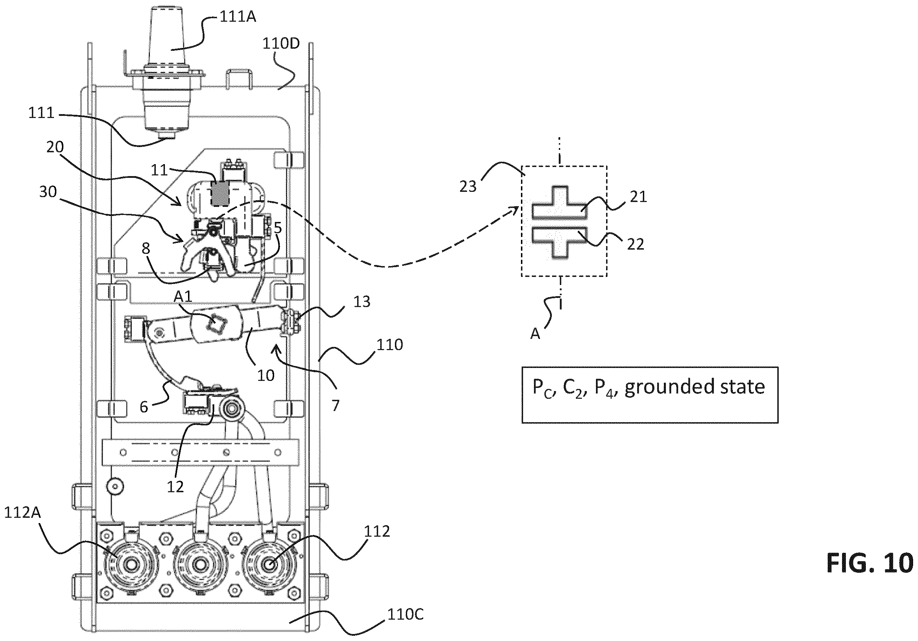

When it is in a grounded state (figure 10), the switching device 1 has, for each electric pole:
- the movable contact 10 in the second end-of-run position P_{C};
- the movable contact 10 with the first contact portion coupled to the third fixed contact region of the second fixed contact 6 and with the second contact portion coupled to the fourth contact region of the third fixed contact 7;
- the movable arc contact 22 in an uncoupled position P4 from the fixed arc contact 21;
- the second and third fixed contacts 6, 7 electrically connected one to another and electrically disconnected from the first fixed contact 5;
- the fourth fixed contact 8 electrically disconnected from the second fixed contact 6;
- the motion transmission mechanism 30 in the second configuration C2.

No currents can flow between the first and second pole terminals 11, 12 and the second pole terminal 12 is put at a ground voltage.

### Opening manoeuvre

The switching device 1 carries out an opening manoeuvre, when it switches from the closed state to the open state.

During an opening manoeuvre of the switching device, the movable contact 10 moves, according to the first rotation direction R1, between the first end-of-run position P_{A} and the intermediate position P_{B}. The movable contact 10 thus moves away from the corresponding first fixed contact 5.

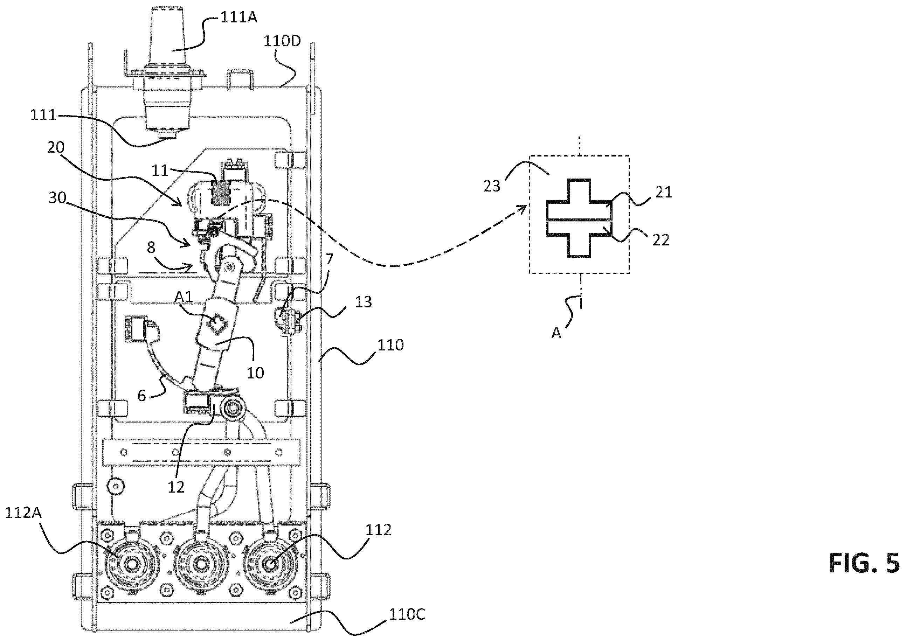

When the movable contact 10 starts moving according to the first rotation direction R1, the first movable contact portion of the movable contact 10 couples to the fourth fixed contact 8 while being slidingly coupled to the first fixed contact region of the first fixed contact 5. The second movable contact portion of the movable contact 10 remains slidingly coupled to the second fixed contact 6, at the second contact region and the first contoured end of said fixed contact (figure 5).

The movable contact 10 thus electrically connects both the first fixed contact 5 and the fourth fixed contact 8 with the second fixed contact 6. A current can flow between the first and second pole terminals 11, 12 passing through the first fixed contact 5 and the vacuum interrupter 20 in parallel. Obviously, most of the current will flow along the first fixed contact 5 as the current path passing through this electric contact has a lower equivalent resistance with respect to the current path passing through the vacuum interrupter.

At this stage of the opening manoeuvre, the movable contact 10 does not interact with the motion transmission mechanism 30 yet.

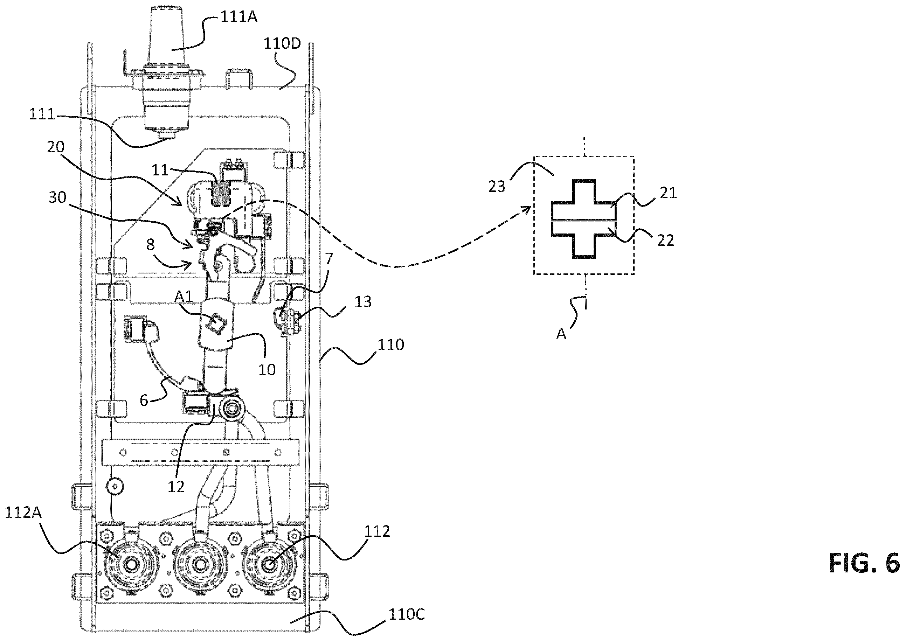

Upon a further movement according to the first rotation direction R1, the movable contact 10 decouples from the first contact region of the first fixed contact 5 while remaining slidingly coupled to the fourth fixed contact 8 and the second fixed contact 6 (figure 6).

The movable contact 10 thus electrically disconnects the first fixed contact 5 from the second fixed contact 6 while maintaining the fourth fixed contact 8 electrically connected with the second fixed contact 6. In this situation, a current flowing along the electric pole is fully deviated through the vacuum interrupter 20 as no current can flow through the first fixed contact 5. The formation of electric arcs at the contact region 10A of the movable contact 10 is thus prevented.

At this stage of the opening manoeuvre, the movable contact 10 does not interact with the motion transmission mechanism 30 yet.

While it is slidingly coupled to the fourth fixed contact 8 and to the second fixed contact 6, the movable contact 10 couples to and actuates the motion transmission mechanism 30 (figure 6). The actuation by the movable contact 10 causes a transition of the motion transmission mechanism from the first configuration C1 to the second configuration C2 and a consequent movement of the movable arc contact 22 from the coupled position P3 with the fixed arc contact 21 to the uncoupled position P4 from the fixed arc contact 21.

The separation of the electric contacts 21, 22 causes the rising of electric arcs between said electric contacts. However, since the electric contacts 21, 22 are immersed in a vacuum atmosphere, such electric arcs can be quenched efficiently thereby quickly leading to the interruption of the current flowing along the electric pole.

In the meanwhile, the movable contact 10 maintains the fourth fixed contact 8 electrically connected to the second fixed contact 6, thereby preventing the formation of electric arcs at the movable contact regions of the movable contact 10.

Upon a further movement towards the intermediate position P_{B}, according to the first rotation direction R1, the movable contact 10 decouples from the motion transmission mechanism 30, which remains in the second configuration C2, and from the second and fourth fixed contacts 6 and 8, thereby electrically disconnecting the fourth fixed contact 8 from the second fixed contact 6. The movable contact 10 then reaches the intermediate position P_{B}, which corresponds to an open state of the switching device (figure 7).

At this stage of the opening manoeuvre, the movable contact 10 does not interact with the motion transmission mechanism 30 anymore.

### Closing manoeuvre

The switching device 1 carries out a closing manoeuvre, when it switches from the open state to the close state.

Before carrying out a closing manoeuvre, the switching device may have carried out a reconnecting manoeuvre in order to switch in an open state.

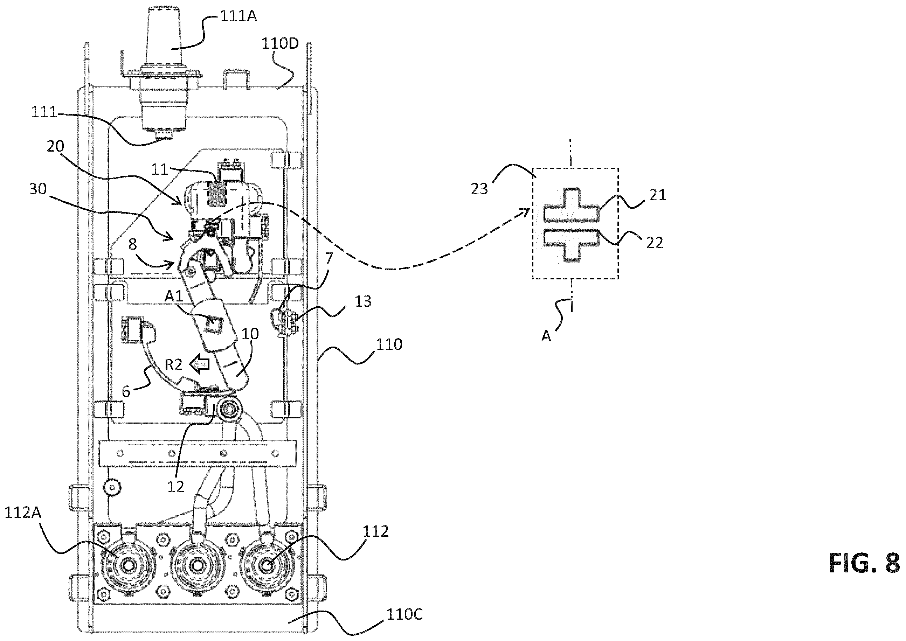

During a closing manoeuvre of the switching device, the movable contact 10 moves, according to the second rotation direction R2, between the intermediate position P_{B} and the first end-of-run position P_{A}. The movable contact 10 thus moves towards the corresponding first fixed contact 5 (figure 8).

Upon an initial movement according to the second rotation direction R2, the movable contact 10 couples to the fourth fixed contact 8 (at the movable first contact portion thereof) and to the second fixed contact 6 (at the second movable contact portion thereof), thereby electrically connecting the fourth fixed contact 8 with the second fixed contact 6.

At this stage of the closing manoeuvre, the movable contact 10 does not interact with the motion transmission mechanism 30 yet.

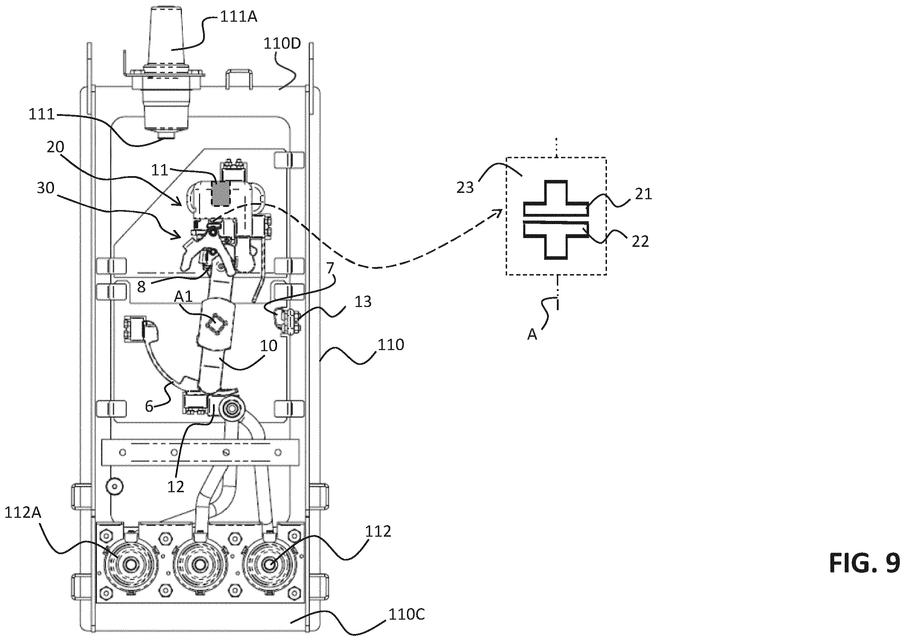

Upon a further movement according to the second rotation direction R2, the movable contact 10 couples to the first fixed contact region of the first fixed contact 5 (at the first movable contact portion) while being slidingly coupled to the fourth fixed contact 8 and to the second fixed contact 6 (figure 9). In this transitory situation, both the first fixed contact 5 and the fourth fixed contact 8 are electrically connected with the second fixed contact 6.

At this stage of the closing manoeuvre, the movable contact 10 does not interact with the motion transmission mechanism 30 yet.

Upon a further movement according to the second rotation direction R2, the movable contact 10 decouples from the fourth fixed contact 8 while being slidingly coupled to the first fixed contact region of the first fixed contact 5 and to the second fixed contact 6 (figure 9).

The movable contact 10 thus electrically disconnects the fourth fixed contact 8 from the second fixed contact 6 while maintaining electrically connected the first fixed contact 5 and the second fixed contact 6. In this way, the vacuum interrupter 20 does not have to carry a possible short circuit current or an overload current or, more simply, a nominal current during the "making current" process. The vacuum chamber 23 can be realized with a more compact design, which allows obtaining a size reduction for the overall switching device.

While it is slidingly coupled to the first fixed contact region of the first fixed contact 5 and to the second fixed contact 6, the movable contact 10 couples to and actuates the motion transmission mechanism 30 (figure 9).

The actuation by the movable contact 10 causes a transition of the motion transmission mechanism 30 from the second configuration C2 to the first configuration C1 and a consequent movement of the movable arc contact 22 from the uncoupled position P4 from the fixed arc contact 21 to the coupled position P3 with the fixed arc contact 21. In the meanwhile, the movable contact 10 maintains the first fixed contact 5 electrically connected to the second fixed contact 6.

The movable contact 10 then reaches the first end-of-run position P_{A}, which corresponds to a closed state of the switching device (figure 4).

### Disconnecting manoeuvre

The switching device 1 carries out a disconnecting manoeuvre, when it switches from an open state to a grounded state.

Obviously, before carrying out a disconnecting manoeuvre, the switching device has to carry out an opening manoeuvre as described above in order to switch in an open state.

During a disconnecting manoeuvre of the switching device, the movable contact 10 moves, according to the first rotation direction R1, between the intermediate position P_{B} and the second end-of-run position P_{C}.

When the movable contact 10 reaches the second end-of-run position P_{C}, its first movable contact region couples to third fixed contact region of the second fixed contact 6 while its second movable contact region couples to the fourth fixed contact region of the third fixed contact 7.

In this situation, the movable contact 10 electrically connects the second fixed contact 6 with the third fixed contact 7 and, consequently, the second pole terminal 12 with the ground terminal 13. The second pole terminal 12 results therefore put at a ground voltage.

It is evidenced that the motion transmission mechanism 30 remains in the second configuration C2 when the switching device carries out a disconnecting manoeuvre.

### Reconnecting manoeuvre

The switching device 1 carries out a reconnecting manoeuvre, when it switches from a grounded state to an open state.

During a reconnecting manoeuvre of the switching device, the movable contact 10 moves, according to the second rotation direction R2, between the second end-of-run position P_{C} and the intermediate position P_{B}.

In this way, the movable contact 10 causes the movable contact 10 to decouple from the second fixed contact region of the second fixed contact 6 and from the fourth fixed contact region of the third fixed contact 7, thereby electrically disconnecting the third fixed contact 7 from the second fixed contact 6.

The movable contact 10 does not electrically connect the second pole terminal 12 with the ground terminal 13 anymore. The second pole terminal 12 is therefore at a floating voltage. It is evidenced that the motion transmission mechanism 30 remains in the second configuration C2, when the switching device carries out a reconnecting manoeuvre.

The switchgear equipment, according to the invention, provides remarkable advantages with respect to the known apparatuses of the state of the art.

The switchgear equipment of the invention comprises switching modules with a high structural compactness, even when they accommodate fuse devices.

Nevertheless, the switchgear equipment of the invention comprises switching module, in which high levels of dielectric insulation between the internal live parts are ensured, even if an environment-friendly insulating gas is used to provide dielectric insulation.

The switchgear equipment of the invention is of relatively easy and cheap industrial production and installation on the field.

## Claims

1. Switchgear equipment (100) for electric power distribution grids, said switchgear equipment including a plurality of switching modules (101A, 101B),
wherein each switching module comprises an outer casing (110) defining an internal volume that is filled with an insulating gas, first module terminals (111) electrically couplable with corresponding first conductors of an electric line and second module terminals (112) electrically couplable with corresponding second conductors of an electric line,
wherein each switching module (101A, 101B) comprises a switching device (1) including, for each one of a plurality of electric poles:
- a first pole terminal (11), a second pole terminal (12) and a ground terminal (13);
- a plurality of fixed contacts (5, 6, 7, 8) spaced apart one from another, wherein said fixed contacts include a first fixed contact (5) electrically connected to said first pole terminal (11), a second fixed contact (6) electrically connected to said second pole terminal (12), a third fixed contact (7) electrically connected to said ground pole terminal (13), and a fourth fixed contact (8),
- a movable contact (10) reversibly movable about a rotation axis (A1) according to opposite first and second rotation directions (R1, R2), so that said movable contact (10) can be coupled to or uncoupled from said fixed contacts (5, 6, 7, 8),
wherein said movable contact (10) is coupled to a first fixed contact region of said first fixed contact (5) and to a second fixed contact region of said second fixed contact (6), thereby electrically connecting said first and second fixed contacts (5, 6), when said switching device is in a closed state,
wherein said movable contact (10) is coupled to no fixed contacts, when said switching device is in an open state;
wherein said movable contact (10) is coupled to a third fixed contact region of said second fixed contact (6) and to a fourth fixed contact region of said third fixed contact (7), thereby electrically connecting said second and third fixed contacts (6, 7), when said switching device is in a grounded state;
- a vacuum interrupter (20) comprising a fixed arc contact (21) electrically connected to said first pole terminal (11), a movable arc contact (22) electrically connected to said fourth fixed contact (8) and reversibly movable along a corresponding translation axis (A) between a coupled position (P3) with said fixed arc contact (21) and an uncoupled position (P4) from said fixed arc contact (21) and a vacuum chamber (23), in which said fixed arc contact (21) and said movable arc contact (22) are enclosed and can be coupled or decoupled;
- a motion transmission mechanism (30) operatively coupled to said movable arc contact (22) and actuatable by said movable contact (10) to cause a movement of said movable arc contact (22) along said translation axis (A), when said movable contact (10) moves about said rotation axis (A1);
wherein said switchgear equipment (100) comprises one or more first switching modules (101A) and one or more second switching modules (101B), each first switching module comprising said switching device (1) and a fuse assembly (150) electrically connected in series between said first and second module terminals (111, 112) and accommodated in the internal volume of said first switching module,
each second switching module comprising said switching device (1) electrically connected in series between said first and second module terminals (111, 112) and accommodated in the internal volume of said second switching module.

2. Switchgear equipment, according to claim 1, **characterized in that** the switching device (1) of each first switching module (101A) has, for each electric pole, said first pole terminal (11) electrically connected to a corresponding first module terminal (111) of said first switching module, said second pole terminal (12) electrically connected to a corresponding fuse device (151) of said fuse assembly (150), and said ground terminal (13) electrically connected to a corresponding ground conductor of said first switching module.

3. Switchgear equipment, according to one of the previous claims, **characterized in that** the switching device (1) of each first switching module (101A) is accommodated in a first portion of internal volume, which is proximal to a top wall (110D) of the outer casing (110) of said first switching module, and **in that** the fuse assembly (150) of each first switching module is accommodated in a second portion of internal volume, which is proximal to an opposite base wall (110C) of the outer casing (110) of said first switching module.

4. Switchgear equipment, according to one of the previous claims, **characterized in that** the switching device (1) and the fuse devices (151) of each first switching module (101A) extend along parallel longitudinal axes (A1, A2) perpendicular to front and rear walls (110A, 110B) of the outer casing (110) of said first switching module.

5. Switchgear equipment, according to one of the previous claims, **characterized in that** the fuse assembly (150) of each first switching module (101A) comprises a pair of fuse devices (151) arranged in proximity of a lateral wall (110E) of the outer casing (110) of said first switching module.

6. Switchgear equipment, according to one of the previous claims, **characterized in that** the switching device (1) of each switching module (101A, 101B) has, for each electric pole, the first and second fixed contact regions of said first and second fixed contacts (5, 6) arranged at opposite sides of said switching device relative to the rotation axis (A1) of said movable contact (10), said first and second contact regions being displaced relative to a first alignment direction (D1) of said first and second pole terminals (11, 12), so that said first and second contact regions are aligned along a second alignment direction (D2) angularly spaced from said first alignment direction (D1).

7. Switching device, according to claim 5, **characterized in that** the switching device (1) of each switching module (101A, 101B) has, for each electric pole, said vacuum interrupter (20) arranged in proximity of said first pole terminal (11) and oriented so that the translation axis (A) of said movable arc contact (22) is parallel to or coinciding with the first alignment direction (D1) of said first and second pole terminals (11, 12).

8. Switchgear equipment, according to one of the previous claims, **characterized in that** the switching device (1) of each second switching module (101B) has, for each electric pole, said first pole terminal (11) electrically connected to a corresponding first module terminal (111) of said second switching module, said second pole terminal (12) electrically connected to a corresponding second module terminal (112) of said second switching module, and said ground terminal (13) electrically connected to a corresponding ground conductor of said second switching module.

9. Switchgear equipment, according to one of the previous claims, **characterized in that** the switching device (1) of each switching module (101A, 101B) is a load-break switch for medium voltage electric systems.

10. Switchgear equipment, according to one of the previous claims, **characterized in that** it is a Ring Main Unit for medium voltage electric systems.

## Patentansprüche

1. Schaltanlagen (100) für elektrische Stromverteilungsnetze, wobei die Schaltanlagen eine Vielzahl von Schaltmodulen (101A, 101B) beinhalten,
wobei jedes Schaltmodul ein Außengehäuse (110), das ein Innenvolumen definiert, das mit einem Isoliergas gefüllt ist, erste Modulanschlüsse (111), die mit entsprechenden ersten Leitern einer elektrischen Leitung elektrisch koppelbar sind, und zweite Modulanschlüsse (112), die mit entsprechenden zweiten Leitern einer elektrischen Leitung elektrisch koppelbar sind, umfasst,
wobei jedes Schaltmodul (101A, 101B) eine Schaltvorrichtung (1) umfasst, die für jeden einer Vielzahl von elektrischen Polen Folgendes beinhaltet:
- einen ersten Polanschluss (11), einen zweiten Polanschluss (12) und einen Erdungsanschluss (13);
- eine Vielzahl von festen Kontakten (5, 6, 7, 8), die voneinander beabstandet sind, wobei die festen Kontakte einen ersten festen Kontakt (5), der mit dem ersten Polanschluss (11) elektrisch verbunden ist, einen zweiten festen Kontakt (6), der mit dem zweiten Polanschluss (12) elektrisch verbunden ist, einen dritten festen Kontakt (7), der mit dem Erdungspolanschluss (13) elektrisch verbunden ist, und einen vierten festen Kontakt (8) beinhalten,
- einen beweglichen Kontakt (10), der um eine Drehachse (A1) gemäß entgegengesetzten ersten und zweiten Drehrichtungen (R1, R2) reversibel beweglich ist, sodass der bewegliche Kontakt (10) mit den festen Kontakten (5, 6, 7, 8) gekoppelt oder von diesen entkoppelt werden kann,
wobei der bewegliche Kontakt (10) mit einem ersten festen Kontaktbereich des ersten festen Kontakts (5) und mit einem zweiten festen Kontaktbereich des zweiten festen Kontakts (6) gekoppelt ist, wodurch der erste und der zweite feste Kontakt (5, 6) elektrisch verbunden werden, wenn sich die Schaltvorrichtung in einem geschlossenen Zustand befindet,
wobei der bewegliche Kontakt (10) mit keinem der festen Kontakte gekoppelt ist, wenn sich die Schaltvorrichtung in einem offenen Zustand befindet;
wobei der bewegliche Kontakt (10) mit einem dritten festen Kontaktbereich des zweiten festen Kontakts (6) und mit einem vierten festen Kontaktbereich des dritten festen Kontakts (7) gekoppelt ist, wodurch der zweite und der dritte feste Kontakt (6, 7) elektrisch verbunden werden, wenn sich die Schaltvorrichtung in einem geerdeten Zustand befindet;
- eine Vakuumschaltröhre (20), umfassend einen festen Lichtbogenkontakt (21), der mit dem ersten Polanschluss (11) elektrisch verbunden ist, einen beweglichen Lichtbogenkontakt (22), der mit dem vierten festen Kontakt (8) elektrisch verbunden ist und entlang einer entsprechenden Translationsachse (A) zwischen einer gekoppelten Position (P3) mit dem festen Lichtbogenkontakt (21) und einer von dem festen Lichtbogenkontakt (21) entkoppelten Position (P4) reversibel beweglich ist, und eine Vakuumkammer (23), in der der feste Lichtbogenkontakt (21) und der bewegliche Lichtbogenkontakt (22) eingeschlossen sind und miteinander gekoppelt oder voneinander entkoppelt werden können;
- einen Bewegungsübertragungsmechanismus (30), der mit dem beweglichen Lichtbogenkontakt (22) wirkgekoppelt ist und durch den beweglichen Kontakt (10) betätigbar ist, um eine Bewegung des beweglichen Lichtbogenkontakts (22) entlang der Translationsachse (A) zu bewirken, wenn sich der bewegliche Kontakt (10) um die Drehachse (A1) bewegt;
wobei die Schaltanlagen (100) ein oder mehrere erste Schaltmodule (101A) und ein oder mehrere zweite Schaltmodule (101B) umfassen, wobei jedes erste Schaltmodul die Schaltvorrichtung (1) und eine Sicherungsanordnung (150), die zwischen dem ersten und dem zweiten Modulanschluss (111, 112) elektrisch in Reihe verbunden ist und in dem Innenvolumen des ersten Schaltmoduls aufgenommen ist, umfasst,
wobei jedes zweite Schaltmodul die Schaltvorrichtung (1) umfasst, die zwischen dem ersten und dem zweiten Modulanschluss (111, 112) elektrisch in Reihe verbunden ist und in dem Innenvolumen des zweiten Schaltmoduls aufgenommen ist.

2. Schaltanlagen nach Anspruch 1, **dadurch gekennzeichnet, dass** die Schaltvorrichtung (1) jedes ersten Schaltmoduls (101A) für jeden elektrischen Pol den ersten Polanschluss (11), der mit einem entsprechenden ersten Modulanschluss (111) des ersten Schaltmoduls elektrisch verbunden ist, den zweiten Polanschluss (12), der mit einer entsprechenden Sicherungsvorrichtung (151) der Sicherungsanordnung (150) elektrisch verbunden ist, und den Erdungsanschluss (13), der mit einem entsprechenden Erdungsleiter des ersten Schaltmoduls elektrisch verbunden ist, aufweist.

3. Schaltanlagen nach einem der vorhergehenden Ansprüche, **dadurch gekennzeichnet, dass** die Schaltvorrichtung (1) jedes ersten Schaltmoduls (101A) in einem ersten Innenvolumenabschnitt aufgenommen ist, der proximal zu einer oberen Wand (110D) des Außengehäuses (110) des ersten Schaltmoduls angeordnet ist, und dass die Sicherungsanordnung (150) jedes ersten Schaltmoduls in einem zweiten Innenvolumenabschnitt aufgenommen ist, der proximal zu einer gegenüberliegenden Basiswand (110C) des Außengehäuses (110) des ersten Schaltmoduls angeordnet ist.

4. Schaltanlagen nach einem der vorhergehenden Ansprüche, **dadurch gekennzeichnet, dass** sich die Schaltvorrichtung (1) und die Sicherungsvorrichtungen (151) jedes ersten Schaltmoduls (101A) entlang paralleler Längsachsen (A1, A2) senkrecht zu der vorderen und der hinteren Wand (110A, 110B) des Außengehäuses (110) des ersten Schaltmoduls erstrecken.

5. Schaltanlagen nach einem der vorhergehenden Ansprüche, **dadurch gekennzeichnet, dass** die Sicherungsanordnung (150) jedes ersten Schaltmoduls (101A) ein Paar Sicherungsvorrichtungen (151) umfasst, die in der Nähe einer Seitenwand (110E) des Außengehäuses (110) des ersten Schaltmoduls angeordnet sind.

6. Schaltanlagen nach einem der vorhergehenden Ansprüche, **dadurch gekennzeichnet, dass** die Schaltvorrichtung (1) jedes Schaltmoduls (101A, 101B) für jeden elektrischen Pol den ersten und den zweiten festen Kontaktbereich des ersten bzw. des zweiten festen Kontakts (5, 6) aufweist, wobei der erste und der zweite feste Kontaktbereich relativ zu der Drehachse (A1) des beweglichen Kontakts (10) auf gegenüberliegenden Seiten der Schaltvorrichtung angeordnet sind, wobei der erste und der zweite Kontaktbereich relativ zu einer ersten Ausrichtungsrichtung (D1) des ersten und des zweiten Polanschlusses (11, 12) versetzt sind, sodass der erste und der zweite Kontaktbereich entlang einer zweiten Ausrichtungsrichtung (D2) ausgerichtet sind, die von der ersten Ausrichtungsrichtung (D1) winklig beabstandet ist.

7. Schaltvorrichtung nach Anspruch 5, **dadurch gekennzeichnet, dass** die Schaltvorrichtung (1) jedes Schaltmoduls (101A, 101B) für jeden elektrischen Pol die Vakuumschaltröhre (20) aufweist, die in der Nähe des ersten Polanschlusses (11) angeordnet und so ausgerichtet ist, dass die Translationsachse (A) des beweglichen Lichtbogenkontakts (22) parallel zu der ersten Ausrichtungsrichtung (D1) des ersten und des zweiten Polanschlusses (11, 12) verläuft oder mit dieser zusammenfällt.

8. Schaltanlagen nach einem der vorhergehenden Ansprüche, **dadurch gekennzeichnet, dass** die Schaltvorrichtung (1) jedes zweiten Schaltmoduls (101B) für jeden elektrischen Pol den ersten Polanschluss (11), der elektrisch mit einem entsprechenden ersten Modulanschluss (111) des zweiten Schaltmoduls verbunden ist, den zweiten Polanschluss (12), der elektrisch mit einem entsprechenden zweiten Modulanschluss (112) des zweiten Schaltmoduls verbunden ist, und den Erdungsanschluss (13), der elektrisch mit einem entsprechenden Erdungsleiter des zweiten Schaltmoduls verbunden ist, aufweist.

9. Schaltanlagen nach einem der vorhergehenden Ansprüche, **dadurch gekennzeichnet, dass** die Schaltvorrichtung (1) jedes Schaltmoduls (101A, 101B) ein Lasttrennschalter für elektrische Mittelspannungssysteme ist.

10. Schaltanlagen nach einem der vorhergehenden Ansprüche, **dadurch gekennzeichnet, dass** sie Ringkabelschaltanlagen für elektrische Mittelspannungssysteme sind.

## Revendications

1. Équipement (100) de commutation pour réseaux de distribution d'énergie électrique, ledit équipement de commutation incluant une pluralité de modules (101A, 101B) de commutation,
chaque module de commutation comprenant une enveloppe extérieure (110) définissant un volume interne rempli d'un gaz isolant, des premières bornes (111) de module pouvant être couplées électriquement avec des premiers conducteurs correspondants d'une ligne électrique et des deuxièmes bornes (112) de module pouvant être couplées électriquement avec des deuxièmes conducteurs correspondants d'une ligne électrique,
chaque module (101A, 101B) de commutation comprenant un dispositif (1) de commutation incluant, pour chacun d'une pluralité de pôles électriques :
- une première borne polaire (11), une deuxième borne polaire (12) et une borne (13) de masse ;
- une pluralité de contacts fixes (5, 6, 7, 8) espacés les uns des autres, lesdits contacts fixes incluant un premier contact fixe (5) connecté électriquement à ladite première borne polaire (11), un deuxième contact fixe (6) connecté électriquement à ladite deuxième borne polaire (12), un troisième contact fixe (7) connecté électriquement à ladite borne (13) de pôle de masse, et un quatrième contact fixe (8),
- un contact mobile (10) pouvant être déplacé de manière réversible autour d'un axe de rotation (A1) selon des premier et deuxième sens de rotation opposés (R1, R2), de telle sorte que ledit contact mobile (10) puisse être couplé auxdits contacts fixes (5, 6, 7, 8) ou découplé de ceux-ci,
ledit contact mobile (10) étant couplé à une première région de contact fixe dudit premier contact fixe (5) et à une deuxième région de contact fixe dudit deuxième contact fixe (6), connectant ainsi électriquement lesdits premier et deuxième contacts fixes (5, 6), lorsque ledit dispositif de commutation est dans un état fermé,
ledit contact mobile (10) n'étant couplé à aucun contact fixe, lorsque ledit dispositif de commutation est dans un état ouvert ;
ledit contact mobile (10) étant couplé à une troisième région de contact fixe dudit deuxième contact fixe (6) et à une quatrième région de contact fixe dudit troisième contact fixe (7), connectant ainsi électriquement lesdits deuxième et troisième contacts fixes (6, 7), lorsque ledit dispositif de commutation est dans un état mis à la masse,
- un interrupteur (20) à vide comprenant un contact (21) d'arc fixe connecté électriquement à ladite première borne polaire (11), un contact (22) d'arc mobile connecté électriquement audit quatrième contact fixe (8) et pouvant être déplacé de manière réversible le long d'un axe de translation correspondant (A) entre une position couplée (P3) avec ledit contact (21) d'arc fixe et une position découplée (P4) dudit contact (21) d'arc fixe et une chambre (23) à vide dans laquelle ledit contact (21) d'arc fixe et ledit contact (22) d'arc mobile sont enfermés et peuvent être couplés ou découplés ;
- un mécanisme (30) de transmission de mouvement couplé fonctionnellement audit contact (22) d'arc mobile et actionnable par ledit contact mobile (10) pour provoquer un déplacement dudit contact (22) d'arc mobile le long dudit axe de translation (A), lorsque ledit contact mobile (10) se déplace autour dudit axe de rotation (A1) ;
ledit équipement (100) de coupure comprenant un ou plusieurs premiers modules (101A) de commutation et un ou plusieurs deuxièmes modules (101B) de commutation, chaque premier module de commutation comprenant ledit dispositif (1) de commutation et un ensemble fusible (150) connecté électriquement en série entre lesdites premières et deuxièmes bornes (111, 112) de module et logé dans le volume interne dudit premier module de commutation,
chaque deuxième module de commutation comprenant ledit dispositif (1) de commutation connecté électriquement en série entre lesdites première et deuxième bornes (111, 112) de module et logé dans le volume interne dudit deuxième module de commutation.

2. Équipement de commutation selon la revendication 1, **caractérisé en ce que** le dispositif (1) de commutation de chaque premier module (101A) de commutation a, pour chaque pôle électrique, ladite première borne polaire (11) connectée électriquement à une première borne (111) de module correspondante dudit premier module de commutation, ladite deuxième borne polaire (12) connectée électriquement à un dispositif fusible correspondant (151) dudit ensemble fusible (150), et ladite borne (13) de masse connectée électriquement à un conducteur de masse correspondant dudit premier module de commutation.

3. Équipement de commutation selon l'une des revendications précédentes, **caractérisé en ce que** le dispositif (1) de commutation de chaque premier module (101A) de commutation est logé dans une première portion de volume interne qui est proximale d'une paroi supérieure (110D) de l'enveloppe extérieure (110) dudit premier module de commutation, et **en ce que** l'ensemble fusible (150) de chaque premier module de commutation est logé dans une deuxième portion de volume interne, qui est proximale d'une paroi (110C) de fond opposée de l'enveloppe extérieure (110) dudit premier module de commutation.

4. Équipement de commutation selon l'une des revendications précédentes, **caractérisé en ce que** le dispositif (1) de commutation et les dispositifs fusibles (151) de chaque premier module (101A) de commutation s'étendent suivant des axes longitudinaux parallèles (A1, A2) perpendiculaires aux parois avant et arrière (110A, 110B) de l'enveloppe extérieure (110) dudit premier module de commutation.

5. Équipement de commutation selon l'une des revendications précédentes, **caractérisé en ce que** l'ensemble fusible (150) de chaque premier module (101A) de commutation comprend une paire de dispositifs fusibles (151) disposés à proximité d'une paroi latérale (110E) de l'enveloppe extérieure (110) dudit premier module de commutation.

6. Équipement de commutation selon l'une des revendications précédentes, **caractérisé en ce que** le dispositif (1) de commutation de chaque module (101A, 101B) de commutation présente, pour chaque pôle électrique, les première et deuxième régions de contacts fixes desdits premier et deuxième contacts fixes (5, 6) disposées sur des côtés opposés dudit dispositif de commutation par rapport à l'axe de rotation (A1) dudit contact mobile (10), lesdites première et deuxième régions de contact étant décalées par rapport à une première direction d'alignement (D1) desdites première et deuxième bornes polaires (11, 12), de sorte que lesdites première et deuxième régions de contact sont alignées suivant une deuxième direction d'alignement (D2) espacée angulairement de ladite première direction d'alignement (D1).

7. Dispositif de commutation selon la revendication 5, **caractérisé en ce que** le dispositif (1) de commutation de chaque module (101A, 101B) de commutation comporte, pour chaque pôle électrique, ledit interrupteur (20) à vide disposé à proximité de ladite première borne polaire (11) et orienté de sorte que l'axe de translation (A) dudit contact (22) d'arc mobile est parallèle à ou coïncidant avec la première direction d'alignement (D1) desdites première et deuxième bornes polaires (11, 12).

8. Équipement de commutation selon l'une des revendications précédentes, **caractérisé en ce que** le dispositif (1) de commutation de chaque deuxième module (101B) de commutation a, pour chaque pôle électrique, ladite première borne polaire (11) connectée électriquement à une première borne (111) de module correspondante dudit deuxième module de commutation, ladite deuxième borne polaire (12) connectée électriquement à une deuxième borne (112) de module correspondante dudit deuxième module de commutation, et ladite borne (13) de masse reliée électriquement à un conducteur de masse correspondant dudit deuxième module de commutation.

9. Équipement de commutation selon l'une quelconque des revendications précédentes, **caractérisé en ce que** le dispositif (1) de commutation de chaque module (101A, 101B) de commutation est un interrupteur de coupure de charge pour des systèmes électriques moyenne tension.

10. Équipement de commutation selon l'une des revendications précédentes, **caractérisé en ce qu'**il s'agit d'une unité principale en anneau pour des systèmes électriques moyenne tension.
